**Europäisches Patentamt**

(19) **European Patent Office**

**Office européen des brevets**

(11) Veröffentlichungsnummer: **0 289 808**
**B1**

(12) # EUROPÄISCHE PATENTSCHRIFT

(45) Veröffentlichungstag der Patentschrift:
**11.04.90**

(51) Int. Cl.⁴: **B29C 45/57**, B29C 45/37,
B29C 45/14, B29C 33/08

(21) Anmeldenummer: **88105691.5**

(22) Anmeldetag: **09.04.88**

(54) **Verfahren zur Verbesserung der Qualität von Spritzgussteilen.**

(30) Priorität: **25.04.87 DE 3713931**

(43) Veröffentlichungstag der Anmeldung:
**09.11.88 Patentblatt 88/45**

(45) Bekanntmachung des Hinweises auf die Patenterteilung:
**11.04.90 Patentblatt 90/15**

(84) Benannte Vertragsstaaten:
**DE FR GB IT**

(56) Entgegenhaltungen:
**AT-B- 349 205**
**DD-A- 145 078**
**DE-A- 3 138 242**
**DE-B- 1 160 169**
**GB-A- 1 516 714**

(73) Patentinhaber: **BAYER AG,**
**D-5090 Leverkusen 1 Bayerwerk(DE)**

(72) Erfinder: **Depcik, Hans-Werner, Vennstrasse 124 A,**
**D-4000 Düsseldorf 22(DE)**

ACTORUM AG

# Beschreibung

Die Erfindung betrifft ein Verfahren zur Verbesserung der Qualität von Kunststoff-Spritzgußteilen mit starken Querschnittsveränderungen, in dem eine noch mindestens teilweise thermoplastische Masse während des Herstellungszyklusses über im Werkzeug angeordnete Elektroden mit einem hochfrequenten, elektromagnetischen Feld beaufschlagt wird.

Diese Merkmale sind in Kombination allgemein bekannt.

Bei Formteilen ist es oft aus konstruktiven Gründen notwendig, Bereiche mit geringen Dickenabmessungen anzuordnen, die insbesondere dann das vollständige Füllen der Form erschweren, wenn – in Fließrichtung gesehen –, die Abmessungen des Formteilhohlraumes nach einem Engpaß wieder zunehmen. Die Folge sind Fehlstellen. Weiter treten beim Abkühlen Schrumpfungen ein, die zu Einfallstellen an der Oberfläche führen können.

Um obige Probleme zu vermeiden, wurde bisher ein Nachdruck über den noch mindestens teilweise plastischen Bereich des Anspritzpunktes ausgeübt.

Wegen des geringen Querschnittes erstarrt aber bei Abkühlung das Material an dieser Stelle sehr schnell, so daß auf den noch plastischen Kern des Kunststoffteiles kein Druck mehr über den Anspritzkanal ausgeübt werden kann. Die Folge sind Fehlstellen im konstruktiven Bereich bzw. an der Oberfläche des Kunststoffteiles, wodurch die Qualität stark gemindert wird.

Bekannt ist auch ein Verfahren, bei dem während des Einspritzens zur Erniedrigung der Viskosität zwecks besseren Flusses der Kunststoff innerhalb der geschlossenen Form mit einem hochfrequenten Feld beaufschlagt wird, welches über als Elektroden ausgebildete Formhälften erzeugt wird.

Der Nachteil dieses Verfahrens besteht darin, daß zwar die Fließfähigkeit mit großem Energieaufwand beim Einspritzen verbessert wird, aber der beim Erkalten erforderliche Nachdruck nicht über die benötigte Dauer aufrecht erhalten werden kann, da der Kunststoff im ungeheizten Zuführkanal vorher einfriert und der Druck nicht mehr übertragen werden kann. Die Folge sind Einfallstellen im fertigen Kunststoffteil.

Aufgabe der Erfindung ist es, ein Verfahren zu finden, welches bei geschlossener Form erlaubt, über die erforderliche, produktbezogene und temperaturabhängige Zeit die thermoplastische Kunststoffmasse so zu verteilen, daß während des Erkaltens an kritischen Stellen, insbesondere an den Sichtflächen des Kunststoffteiles, keine schädlichen Einfallstellen entstehen können.

Die Aufgabe wird erfindungsgemäß dadurch gelöst, daß nach dem Einspritzen gezielt an einer bestimmten, örtlich begrenzten Stelle des Spritzgießteils Wärme durch das hochfrequente, elektromagnetische Feld dem Kunststoff zur Plastifizierung direkt zugeführt und dort mit einem Stempel ein zusätzlicher Druck auf die thermoplastische Masse ausgeübt wird.

Weitere Ausführungsformen sind in den Unteransprüchen wiedergegeben.

Durch das erfindungsgemäße Verfahren ist es möglich, auch noch nach dem Einspritzen der thermoplastischen Masse bei geschlossener Form und Erkalten des Anspritzpunktes die Formänderung beim Schrumpfvorgang während der Abkühlung zu revidieren. Hierzu wird der an der Formwandung erkaltete Kunststoff im Bereich eines Stempels über ein hochfrequentes Feld direkt erwärmt und plastifiziert, so daß dann mittels des Stempels über diese Stelle ein Druck auf die im Kern, bedingt durch das Temperaturgefälle, noch vorhandene thermoplastische Masse ausgeübt werden kann, wodurch Schrumpfungen bis zuletzt auszugleichen sind, so daß die Maßhaltigkeit der Formteile wesentlich verbessert wird und Einfallstellen vermindert werden. Da der Stempel unabhängig vom Anspritzpunkt angeordnet werden kann, ist es mit diesem Verfahren erstmals möglich, auch bei großen Formteilen gezielt an kritischen Stellen, die durchaus am Ende der Fließstrecke liegen können, den notwendigen Druck aufzubringen ohne daß der Schließdruck der Form erhöht werden muß, da durch die erfinderischen Maßnahmen wesentliche Druckverluste, die sonst über längere Wege vom Anspritzpunkt entstehen, vermieden werden können.

Der Stempel, der sich selbsttätig (Feder) oder fremdbeaufschlagt (Hydraulikkolben) bewegt, kann sowohl über einen Vorsprung im nicht sichtbaren Bereich als auch durch Eindringen in den Formteilhohlraum bei gleichzeitiger Erzeugung einer gewünschten Nut oder einer anderen Vertiefung im Spritzgußteil wirken, wobei an der Sichtseite auf jeden Fall eine einwandfreie Oberfläche entsteht. Überschüssiges Material kann dabei über einen Überlauf abfließen, über den auch der gewünschte Druck eingestellt werden kann.

Ferner ist es möglich, einen Stempel einzusetzen, der weitere Funktionen übernimmt. So kann der Stempel gleichzeitig als Elektrode ausgebildet sein, die beispielsweise nach dem Erkalten als Auswerfer verwendet werden kann.

Auch ist es denkbar, den Stempel kopfseitig mit einem Metallteil zu versehen, welches später im Kunststoffteil verbleibt, um als Verbindungsstück zu anderen Kunststoffteilen zu dienen.

In einer anderen Durchführung des Verfahrens wird gezeigt, daß mit Hilfe des elektrischen Feldes im Kunststoff kanalartig Fließwege mit verringerter Viskosität zu kritischen Bereichen frei gehalten werden können, die den Einflußbereich des Stempels vergrößern und vor allen Dingen unerwünschte Rippen, wenn sie nur zum Zwecke des Materialtransportes benötigt werden, überflüssig machen.

Vorteilhaft ist es, den Stempel in der Form so auszubilden, daß die Außenkontur nach dem Eindrücken genau der geforderten runden bzw. konischen Vertiefung oder einer geraden bzw. gebogenen Nut entspricht.

Die Kunststoffteile werden im Bereich des Stempels mit einem elektromagnetischen Wechselfeld bei einer Frequenz von $10^5 - 10^{10}$ Hz, vorzugsweise $10^6 - 10^9$ Hz, mit einer elektrischen Feldstärke von $0,5 - 20$ kV/mm, insbesondere von $1 - 8$ kV/mm eingesetzt.

Die Verarbeitungstemperatur muß mehr als 10°C oberhalb des Schmelzpunktes bei teilkristallinem Werkstoff und mehr als 30° C oberhalb der Glastemperatur bei amorphen Werkstoffen liegen. Der elektrische Verlustfaktor sollte bei dieser Temperatur 0,01 betragen. Bei Einspritzzeiten von 0,5 bis 10 s und sogar bis 30 s sind Nachdruckzeiten von 1,5 – 30 s, insbesondere von 2,5 – 15 s, nötig.

An Werkstoffen sind alle teilkristallinen sowie amorphen thermoplastischen Polymere und thermoplastisch verarbeitbare Elastomere geeignet. Insbesondere kann das Verfahren bei folgenden Werkstoffen bzw. deren Mischungen (Blends) eingesetzt werden:

Aromatische Polyester; Acrylnitril-Butadien-Styrol-Terpolymer; Polyamide; Polyethylene; Polybutylenterephthalat; Polyethylenterephthalat; Polycarbonat; Polyphenylensulfid; Polystyrol; Polyphenylenoxid; Polymethylmethacrylat und Styrol-Acrylnitril-Copolymer.

Beispiel

Ein Formteil aus Polycarbonat mit 50 mm Breite und 450 mm Länge bei 3,5 mm Wandstärke wird von der Schmalseite angespritzt mit einer Massetemperatur von 310°C und einer Formentemperatur von 80°C bei einer Fließgeschwindigkeit von 35,8 cm³/s und erhält nach 330 mm Länge eine Wandungsverringerung auf 2,3 mm über die ganze Breite zu einer Länge von 20 mm.

An einer entfernten Ecke des Spritzteiles befindet sich eine Materialanhäufung von 5 x 20 x 30 mm, die einen längeren Nachdruck zur Verhinderung von Einfall- und Lunkerstellen benötigt. Dieser Nachdruck wird durch zu frühzeitige Materialerstarrung an der Wandungsverringerung normal nicht wirksam. Außerdem tritt eine Massetemperaturerniedrigung an dieser Verringerungsstelle von 4°C auf bei einem Druckverlust von 260 bar. Ohne Verengung wäre ein Druckbedarf von 360 bar erforderlich. Durch die Verengung kommt ein weiterer Druckverlust von 145 bar hinzu, wodurch zur Kompensierung eine Massetemperaturerhöhung von 64°C erforderlich würde.

Hier wird nun direkt hinter der Wandungsverringerung ein Überlauf von 12 mm Ø und 10 mm Länge angeordnet, der mit einem Druckkolben von 10 mm Ø beaufschlagt wird. Die hierin während des Füllvorgangs leicht einfließende Masse wird durch ein HF-Feld von 27 MHz Frequenz mit einer elektrischen Feldstärke von 3150 V/cm, welches einer Heizleistung von 10°C/sec x g entspricht, um ca. 15-20°C erwärmt und nach vollständiger Formenfüllung mit einem Druck von 100 bar beaufschlagt, der als Nachdruck voll wirksam wird und auch an dickeren Wandungen Lunker und Einfall vermeidet. Die Temperaturerhöhung vermeidet frühzeitige Erstarrung und kann durch die HF-Feldintensität feinfühlig geregelt werden. Auch bilden sich "innere" Fließkanäle durch die partielle Temperaturerhöhung.

**Patentansprüche**

1. Verfahren zur Verbesserung der Qualität von Kunststoff-Spritzgußteilen mit starken Querschnittsveränderungen, in dem eine noch mindestens teilweise thermoplastische Masse während des Herstellungszyklusses über im Werkzeug angeordnete Elektroden mit einem hochfrequenten, elektromagnetischen Feld beaufschlagt wird, dadurch gekennzeichnet, daß nach dem Einspritzen gezielt an einer örtlich begrenzten Stelle des Spritzgußteils Wärme durch das hochfrequente, elektromagnetische Feld dem Kunststoff direkt zugeführt und dort mit einem Stempel ein zusätzlicher Druck auf die thermoplastische Masse ausgeübt wird.

2. Verfahren zur Verbesserung der Qualität von Kunststoff-Spritzgußteilen nach Anspruch 1, dadurch gekennzeichnet, daß der Stempel im Bereich eines später entfernbaren Überlaufs drückt.

3. Verfahren zur Verbesserung der Qualität von Kunststoff-Spritzgußteilen nach Anspruch 1, dadurch gekennzeichnet, daß der Stempel beim Drücken in den Hohlraum des Formnestes eindringt.

4. Verfahren zur Verbesserung der Qualität von Kunststoff-Spritzgußteilen nach Ansprüchen 1–3, dadurch gekennzeichnet, daß ein metallener, verlorener Kopf des Stempels beim Drücken endgültig mit dem Kunststoffteil verbunden wird.

5. Verfahren zur Verbesserung der Qualität von Kunststoff-Spritzgußteilen nach Ansprüchen 1-4, dadurch gekennzeichnet, daß zusätzlich zur örtlich begrenzten Wärmezufuhr einzelne Flußwege zu kritischen Füllstellen durch ein elektromagnetisches Feld erwärmt werden.

**Claims**

1. Process for improving the quality of plastic injection mouldings having noticeable changes in cross-section, in which a composition which is still at least partially thermoplastic during the manufacturing cycle is subjected to a high-frequency, electromagnetic field by means of electrodes arranged in the mould, characterised in that after injection, heat is introduced into the plastic directly by means of the high-frequency, electromagnetic field and aimed at a point on the injection moulding which is limited locally, and an additional pressure is exerted on the thermoplastic composition there by means of a punch.

2. Process for improving the quality of plastic injection mouldings according to claim 1, characterised in that the punch presses in the region of a flash which can be removed later.

3. Process for improving the quality of plastic injection mouldings according to claim 1, characterised in that the punch penetrates the hollow space of the mould chamber on pressing.

4. Process for improving the quality of plastic injection mouldings according to claims 1–3, characterised in that a metal dead head of the punch is definitely connected to the plastic part on pressing.

5. Process for improving the quality of plastic injection mouldings according to claims 1–4, characterised in that in addition to locally limited introduction of heat, individual flow paths are heated at critical filling points by means of an electromagnetic field.

**Revendications**

1. Procédé pour améliorer la qualité de pièces en matière plastique moulées par injection et présentant de fortes variations de section, dans lequel une masse au moins en partie encore thermoplastique est soumise, pendant le cycle de fabrication, à un champ électromagnétique de haute fréquence à l'aide d'électrodes disposées dans le moule, caractérise en ce que, après l'injection, on apporte directement de la chaleur de façon appropriée à la matière plastique, au moyen du champ électromagnétique à haute fréquence, à un endroit localement limité de la pièce moulée, et on exerce, à l'aide d'un poinçon, une pression supplémentaire sur la masse thermoplastique à cet endroit.

2. Procédé selon la revendication 1, caractérisé en ce que le poinçon exerce la pression dans la zone d'un trop-plein pouvant être enlevé ultérieurement.

3. Procédé selon la revendication 1, caractérisé en ce que le poinçon pénètre dans l'empreinte de moulage en exerçant la pression.

4. Procédé selon les revendications 1–3, caractérisé en ce qu'une tête métallique perdue du poinçon est fixée à demeure à la pièce en plastique lors du pressage.

5. Procédé selon les revendications 1–4, caractérisé en ce que, en plus de l'apport de chaleur localement limité, un champ électromagnétique produit l'échauffement de chemins d'écoulement séparés menant à des points de remplissage critiques.